# EUROPEAN PATENT APPLICATION

(11) **EP 4 606 445 A1**
(43) Date of publication of application: **27.08.2025**
(21) Application number: 25155109.9
(22) Date of filing: 30.01.2025
(51) Int. Cl.: A63F 13/35, A63F 13/352, A63F 13/49, A63F 13/77

(54) **TRANSFERRING CLOUD GAMEPLAY BETWEEN SERVERS**

(30) Priority: 19.02.2024 GB 202402323
(71) Applicant: Sony Interactive Entertainment Europe Limited, London W1F 7LP (GB)
(72) Inventor: SANDERS, Matthew William, c/o Sony Interactive Entertainment Europe Limited, London, W1F 7LP (GB); BIGOS, Andrew James, c/o Sony Interactive Entertainment Europe Limited, London, W1F 7LP (GB)
(74) Representative: Fish & Richardson P.C.

(57) **Abstract**

A method of transferring a cloud gameplay session between servers is provided, carried out by at least one of a first server, a second server and a user device. The first server hosts a first cloud gameplay session connected to the user device, the session comprising a first game state, and receives a request to transfer the session to a second server. Data representing the first game state is obtained and sent to the second server, which establishes a second cloud gameplay session with the device. Updates to the first game state are also sent to the second server, which applies them to the second session. The user device may initiate this transfer by, while playing the first cloud gameplay session hosted by the first server, establishing the second cloud gameplay session with the second server, and requesting that the data be sent and that the transfer take place. The user device then plays the second cloud gameplay session hosted by the second server and ends the first cloud gameplay session.

## Description

### Field

The present disclosure relates to a method of transferring a cloud gameplay session between servers, carried out by one or more of a first server, a second server and a user device, and a computer system for carrying out the method.

### Background

A traditional games console, on which a video game may be played by one or more users, comprises a computer system connected to a display and one or more user input devices such as controllers. The computer system stores instructions to run the game, updating the game according to input received from the controllers and displaying the current game state on the display.

In recent years there has been a move towards cloud gaming, in which a user device is connected to a cloud gaming server over the Internet. The game is hosted on the server and frames of audio-visual data representing the current game state are sent to the user device for display. The user device registers user input and sends it to the server, which updates the game state. This has advantages such as allowing games that require considerable processing power to be played on thin devices such as mobile phones, or allowing users to play games without purchasing or downloading them.

For the best user experience when cloud gaming, low latency is required. When playing over a wired connection such as broadband, even if the end-point connection to the device is wireless, latency can be minimised. However, if the user device is connecting to the Internet via a wireless communication system such as mobile internet access (e.g. 4G, 5G), the connection may be slow.

### Summary

Throughout this specification the word "comprise", or variations such as "includes", "comprises", or "comprising", will be understood to imply the inclusion of a stated element, integer, step, or group of elements, integers, or steps, but not the exclusion of any other element, integer, step, or group of elements, integers, or steps.

In a first aspect, the present disclosure provides a method of transferring a cloud gameplay session between servers, comprising the steps of: at a first server, hosting a first cloud gameplay session connected to a user device, the session comprising a first game state; receiving a request to transfer the first cloud gameplay session to a second server; obtaining data representing the first game state at a first time and sending said data to the second server; sending updates to the first game state that occur after the first time to the second server; and ending the first cloud gameplay session..

In a second aspect, the present disclosure provides a method of transferring a cloud gameplay session between servers, comprising the steps of: at a second server, establishing a second cloud gameplay session connected to a user device; receiving, from a first server, data representing a first game state from a cloud gameplay session hosted by the first server and connected to the user device; applying the data to the second cloud gameplay session, such that the second cloud gameplay session comprises a second game state; receiving, from the first server, game state updates and applying the updates to the second game state; and at the second server, hosting the second gameplay session with the user device..

In a third aspect, the present disclosure provides a method of initiating a transfer of a cloud gameplay session between servers, comprising the steps of, at a user device: playing a first cloud gameplay session hosted by a first server, said first cloud gameplay session comprising a first game state; while playing the first cloud gameplay session, establishing a second cloud gameplay session with a second server, and requesting data representing the first game state to be sent to the second server, such that the second cloud gameplay session comprises a second game state that is identical to the first game state; requesting a transfer to the second server; playing the second cloud gameplay session hosted by the second server; and ending the first cloud gameplay session.

In further aspects, the present disclosure provides data processing apparatus comprising a processor and a memory storing instructions that, when executed by the processor, cause the processor to perform the method of any of the first, second or third aspects.

In further aspects, the present disclosure provides a computer program comprising instructions which, when the program is executed by a computer, cause the computer to carry out the method of any of the first, second or third aspects.

In further aspects, the present disclosure provides a computer-readable storage medium having stored thereon instructions which, when executed by a computer, cause the computer to carry out the method of any of the first, second or third aspects.

It will be appreciated that any features described herein as being suitable for incorporation into one or more aspects or embodiments of the present disclosure are intended to be generalisable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### Brief Description of the Figures

Embodiments of the present disclosure will now be described with reference to the accompanying drawings, where:
Figure 1 shows an exemplary environment in which the disclosure may be carried out;
Figure 2 is a simplified illustrative diagram of a datacentre shown in Figure 1;
Figure 3 is a simplified illustrative diagram of a cloud gaming server shown in Figure 2;
Figure 4 is a simplified illustrative diagram of the contents of a memory shown in Figure 3;
Figure 5 shows steps to carry out a gameplay program shown in Figure 4;
Figure 6 is a simplified illustrative diagram of a user device shown in Figure 2;
Figure 7 is a simplified illustrative diagram of the contents of a memory shown in Figure 6;
Figure 8 shows steps to carry out a cloud gaming program shown in Figure 7;
Figure 9 is a communication diagram showing the transfer of a cloud gameplay session between datacentres shown in Figure 1;
Figures 10a and 10b show steps to carry out a routing program shown in Figure 7;
Figure 11 details steps carried out in Figure 10 to identify candidate datacentres;
Figure 12 shows steps to carry out a routing program shown in Figure 4;
Figure 13 details steps carried out in Figure 12 to handle a request to transfer a session to another server; and
Figure 14 details steps carried out in Figure 12 to handle a request to transfer a session from another server.

### Detailed Description

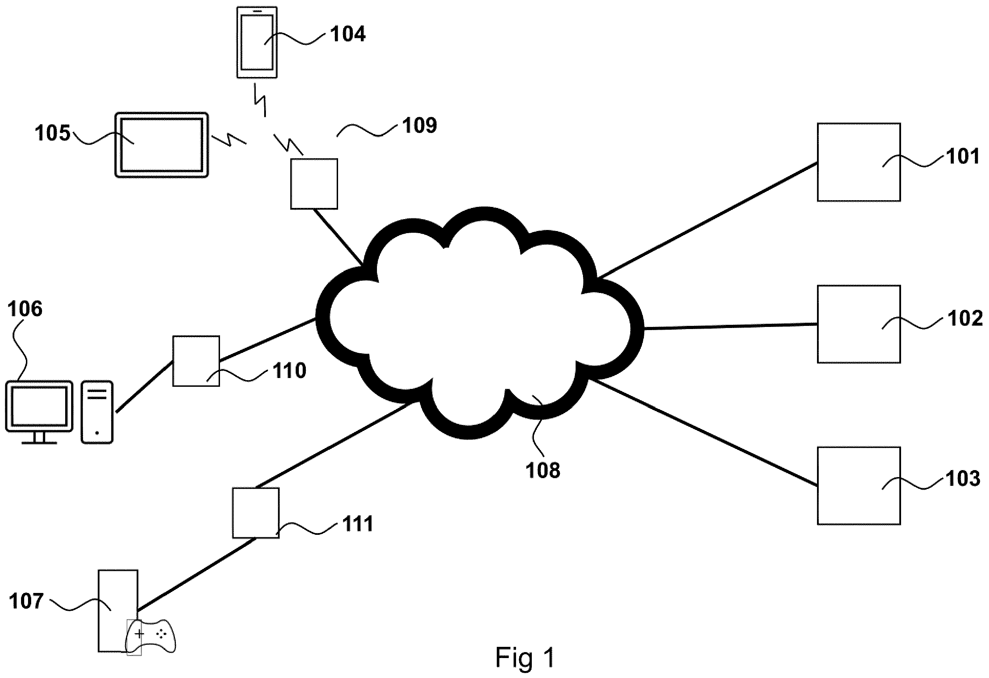

Figure 1 shows an exemplary environment in which the disclosure herein described may be carried out. Datacentres, such as datacentres 101, 102 and 103, host cloud gameplay sessions with user devices, such as user devices 104, 105, 106 and 107. Communication between all the systems shown is via internet 108, although any other network may be used. Datacentres 101 to 103 are connected to internet 108 by high-speed wired connections. In the example of Figure 1, user device 104 is a mobile telephone and user device 105 is a tablet, both of which connect to internet 108 using a SIM card or similar, via wireless connections to base station 109. User device 106 is a home computer system connected via a wired connection to a router 110 which has a wired connection to internet 108, and user device 107 is a games console connected via WiFi to a router 111 which has a wired connection to internet 108. Other types of user device and other connections to a network are envisaged.

Each of datacentres 101 to 103 typically comprises a number of servers, each of which hosts one or more cloud gameplay sessions with one or more user devices. The speed and bandwidth of the connection between a server and a device affects the network latency. One-way latency is the amount of time it takes data packets to travel between the server and the device or vice versa, and network latency is generally measured by determining the round-trip time for a packet such as a ping to travel in both directions. The latency for user devices 106 and 107, which both use wired connections to the Internet, is likely to be relatively low, even though console 107 uses a local wireless connection.

However, the latency for mobile devices using a mobile internet connection, such as devices 104 and 105, is likely to be higher. In addition, mobile devices may move around physically as their user moves around, causing their connection to be transferred between base stations, or to another type of wireless network. This movement may mean that another datacentre can provide a connection with lower latency than the one to which a mobile device is connected. However, because each cloud gameplay session is hosted on a specific server within a datacentre, it is not possible to simply use a different datacentre. The disclosure herein describes a method by which a cloud gameplay session can be transferred to a different datacentre.

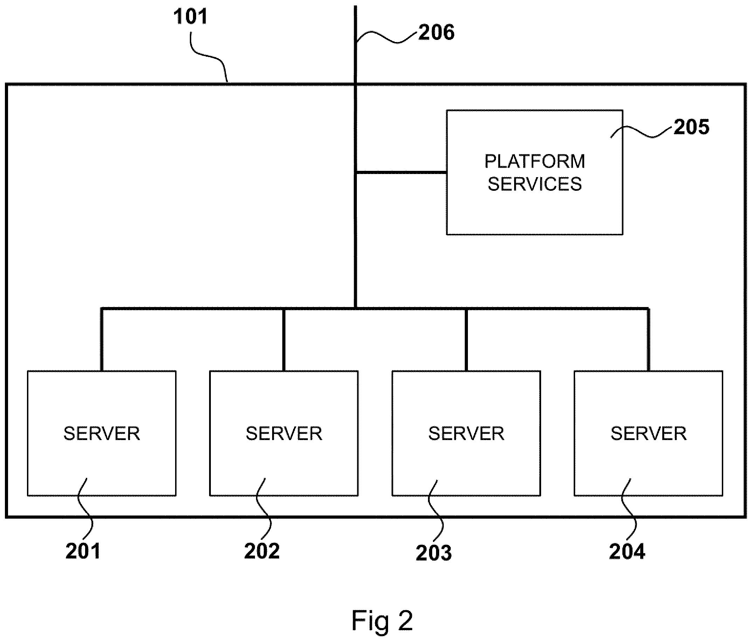

Figure 2 is a simplified illustrative diagram of datacentre 101. Datacentres 102 and 103 are similar. It includes four cloud gaming servers 201, 202, 203 and 204, and a platform services system 205. Connection to internet 108 is via connection 206. Each server hosts one or more sessions, each session pertaining to a game being played by one or more users; for example server 201 hosts session 211. Platform services system 205 provides services such as user log-in, retrieving and changing user account details, accessing saved games, providing lobbies, load balancing, etc. User settings and saved games are stored in a networked location so that they are accessible to all datacentres; this may be in one of the datacentres, distributed across all the datacentres, or another location.

Platform services system 205 allocates new sessions to servers when requests for games are received from user devices, after which the servers communicate directly with the user devices. Platform services system 205 may be a single computer system, a set of computer systems each running different services, a set of virtual machines, or a distributed system.

Datacentres can be configured in many ways, and this configuration is only an example of a suitable datacentre. For example, rather than having a dedicated server for a game, a load balancing system may distribute the game across the servers. It will be understood that while the description herein focusses on dedicated servers, other architectures are within the scope of the claims. In addition, while the servers described herein are computer systems, they may be virtual machines.

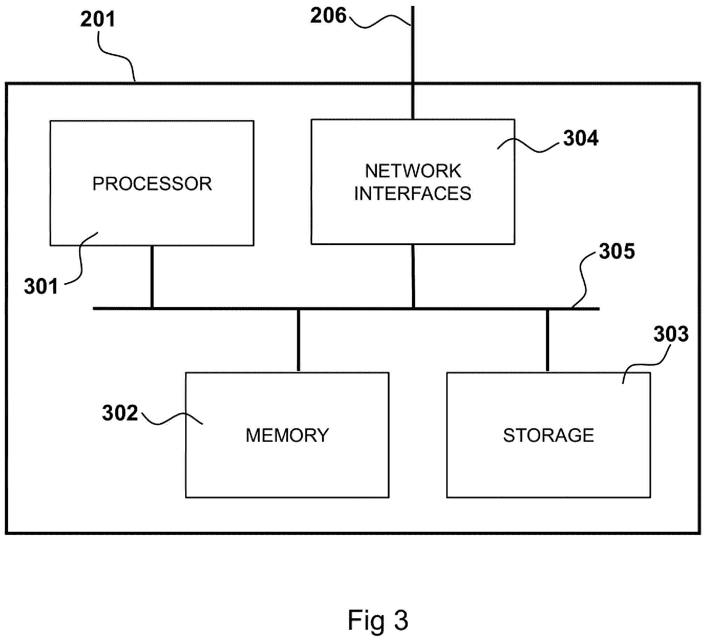

Figure 3 is a simplified illustrative diagram of cloud gaming server 201. Servers 202 to 204, and servers in other datacentres, may be similar. It includes a processor 301, which may include one or more processing units such as CPU's, memory 302 such as RAM memory, and local storage 303 such as one or more disk drives. One or more network interfaces 304 provide an interface to connection 206, via which the server may be configured for first use, instructions may be loaded, and requests may be served. The components 301 to 304 are connected by a bus 305. The diagram shown in Figure 3 is merely an example of a suitable server, and server 201 may be any kind of computer system including a virtual or distributed server.

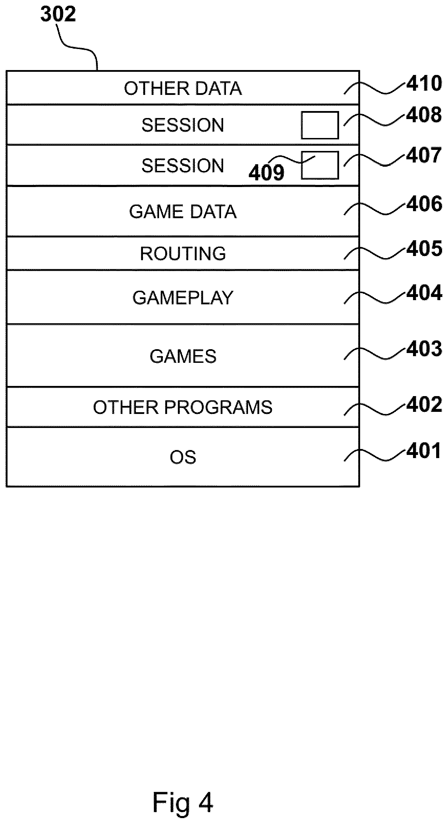

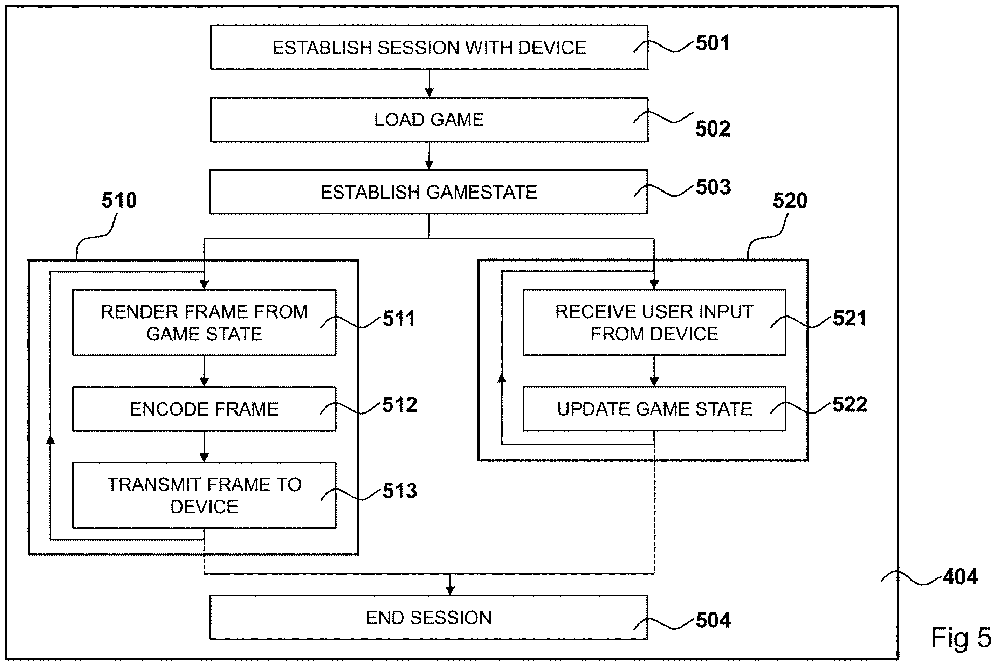

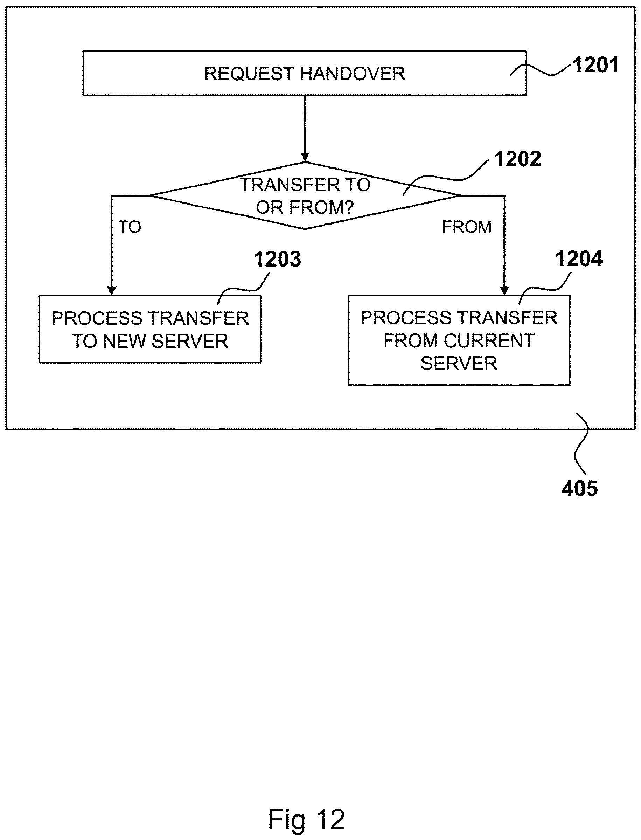

Figure 4 is a simplified illustrative diagram of the contents of memory 302 while server 201 is running. Operating system 401 and other programs 402 necessary for the basic operation of server 201 are not described further herein. Games 403 comprises instructions for all the games being played in sessions on server 201. Gameplay program 404 provides cloud games to user devices and will be described further with reference to Figure 5. Routing program 405 handles requests for game sessions to be transferred between datacentres, and will be described further with reference to Figure 12.

Data held on memory 302 includes generic game data 406 for each game being played, and data required by gameplay program 404 includes one or more cloud gameplay sessions, such as sessions 407 and 408. Each session includes user details and settings and a game state for the game, for example session 407 includes game state 409. Each session also includes any other data required for the game to be played. Memory 302 finally comprises any other data 410 required by programs running on server 201.

The basic steps of gameplay program 404, carried out by processor 301 when running the program, are shown in Figure 5. Instructions for program 404 are copied to storage 303 from a networked location via network interface 305 or by any other suitable method, loaded into memory 302 from storage 303 when required, and carried out by processor 301. Program 404 may be any type of suitable software, and may be suitable for being carried out on a single CPU, a processor chip comprising multiple CPUs, a distributed processor either in a physical location or in a cloud computing environment, or any other suitable processor. Program 404 may be used to play multiple games, or may be instantiated such that there is an instance for each session.

Platform services system 205 receives a request from a user device, for example user device 104, for a cloud game to be played using the settings for a particular user, and allocates the request to server 201, following which gameplay program 404 (or an instance of it) runs. At step 501, a cloud gameplay session, such as session 407, is established with user device 104, over a connection via internet 108. This may be done by any suitable means, and may be handled by platform services system 205 instead of gameplay program 404. Typically, a connection is established between a server and a user device using HTTP or HTTPS protocols over the internet 108.

At step 502 the user's requested game is loaded into memory 302 at games 403 if it is not already there. It may be loaded from storage 303, from another location within datacentre 101, or from a networked location. At step 503 game state 409 is established for session 407. Game state 409 includes all current settings and variables for the game, and the nature of these is dependent on the game being played. For example, the game state for a role-playing game may include the location and movement of the user's character, the location and movement of other characters and objects, the player's inventory, recent actions taken, and so on. The game state may also include the terrain and structures in the character's location. The game state may be loaded from a user's last save, or the user may be starting a fresh game with predetermined or random variables.

Once game state 409 is established, server 201 hosts cloud gameplay session 407 by running two simultaneous threads: thread 510 sends frames to a user device, and thread 420 receives user input from the same user device. These threads run until the session is ended at step 504.

Thread 510 comprises three steps. At step 511 a frame is rendered from game state 409 and game data 406. For example, the game state may comprise the character's location, and the terrain, structures, objects and other characters at that location. These are stored as three-dimensional wire models and textures that cover the models, plus additional information such as lighting and atmospheric effects. The game state also comprises a viewpoint, which may be a virtual camera or the user's character's view, and the three-dimensional models are rendered into a two-dimensional image from that viewpoint. In some cases, the server may carry out the bulk of the rendering and send information to the user device for additional client-side rendering, depending on the capabilities of the user device. In two-dimensional games, rendering is simpler and requires any moving objects to be placed in the correct position on a background to generate a two-dimensional frame. Other types of rendering may be required for other games or types of displays such as VR.

At step 512 the frame is encoded to compress it for transmission, and at step 513 it is transmitted to the user device. This is repeated many times a second to transmit a stream of frames for display on the user device. An audio track and other tracks may also be rendered and transmitted, and it will be understood that this may be carried out within thread 510 or as separate threads.

Thread 520 comprises two steps. At step 521 user input is received from user device 104; this may for example be movement, interacting with the environment or other characters, accessing the inventory, pausing the game, and so on. At step 522 game state 409 is updated using the user input. The next frame that is rendered at step 511 will use the updated game state. Thread 520 is repeated every time user input is received.

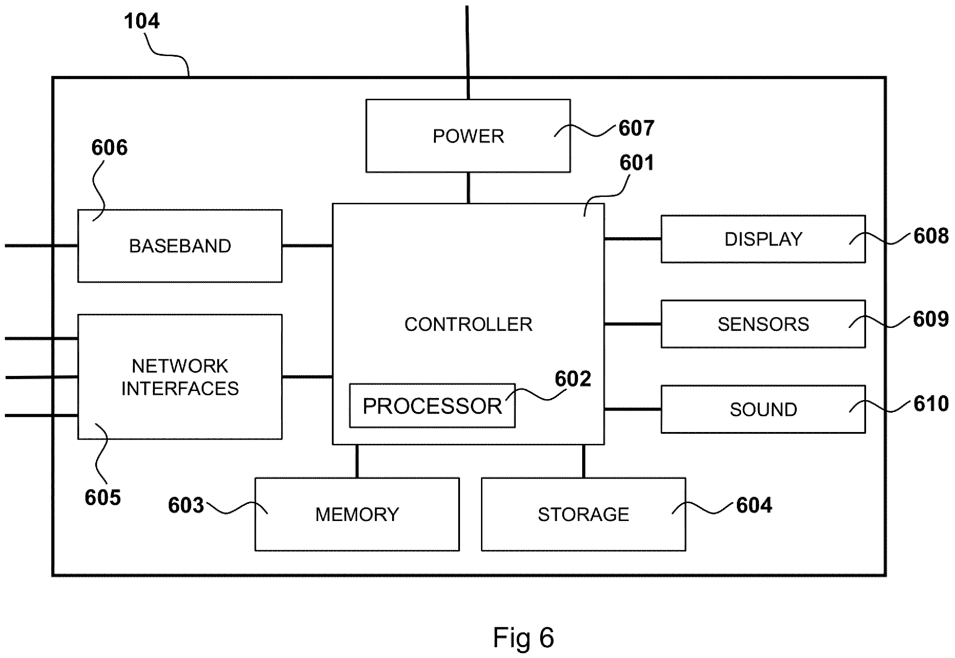

Figure 6 is a simplified illustrative diagram of user device 104, which in this example is a mobile phone. It includes a controller chip 601 that connects to all other components. It comprises a processor 602, which may include one or more processing units such as CPU's and other components not shown such as a GPU, video encoder/decoder, image processing unit, and so on. Device 104 also includes memory 603 such as RAM memory, and local storage 604 such as non-volatile memory. Network interfaces 605 provide connections to wireless networks such as Bluetooth^{®}, Wi-Fi, NFC, and so on. Baseband components 606 provide connection to a mobile telephone network, and include a baseband processor, a SIM card and a transceiver. Power supply 607 provides both power and a wired connection, typically via a USB or Lightning connector.

Display 608 and touch sensors 609 provide a touchscreen typically found on mobile devices, although there may be a keyboard as well or instead of the sensors. Sound components 610 include speakers, a microphone, and possibly a socket for wired headphones.

User device 104 therefore has a number of ways of connecting to networks such as internet 108. Mobile internet access is available via baseband components 606, connection to a router or other networked location is available via network interfaces 605, particularly via Wi-Fi, or the device may be physically connected to a computer system via power supply 607.

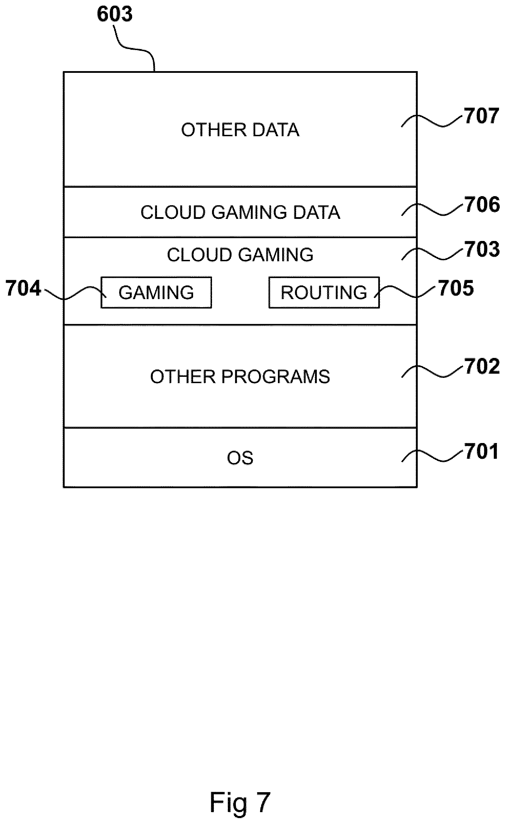

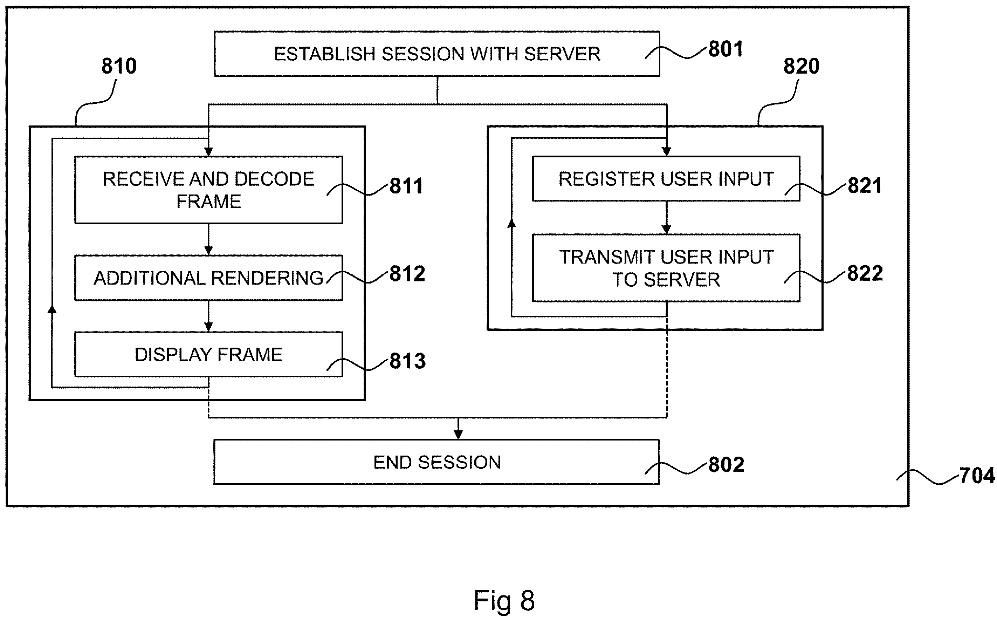

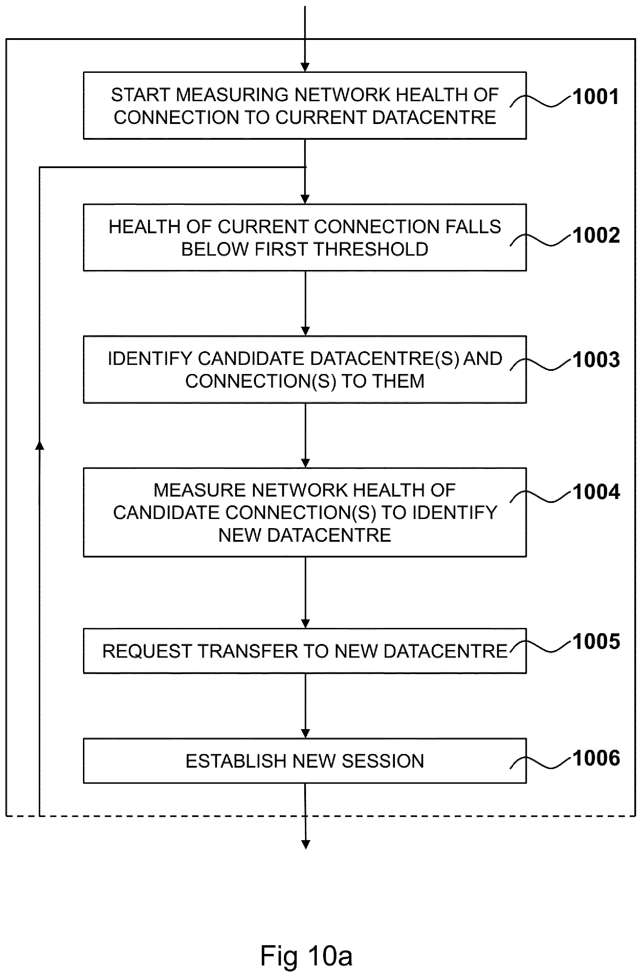

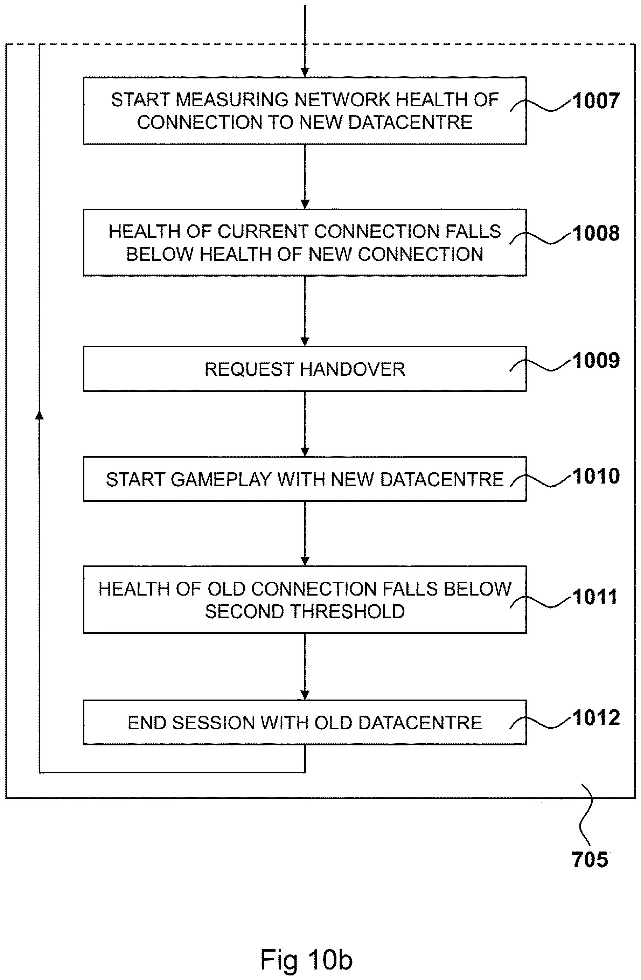

Figure 7 is a simplified illustrative diagram of the contents of memory 603 while device 104 is running. Operating system 701 and other programs 702 running on device 104 are not described further herein. Gaming program 703 comprises instructions for the device to connect to a datacentre and play a game, including cloud gaming program 704 and routing program 705, which will be described further with reference to Figures 8 and 10 respectively.

Data held on memory 603 includes gaming data 706 required by gaming program 703, and any other data 707 required by programs running on device 104.

The basic steps of cloud gaming program 704, carried out by processor 602 when running the program, are shown in Figure 8. Instructions for program 704 are copied to storage 604 from a networked location via any of the device's connection interfaces 605, 606 or 607, loaded into memory 603 from storage 604 when required, and carried out by processor 602. Program 704 may be any type of software suitable for mobile devices, and may be suitable for being carried out on a single CPU or a processor chip comprising multiple CPUs. A program having the same functionality may be installed and used on any type of user device, for example a games console or computer as described with reference to Figure 1.

Program 704 establishes a cloud gameplay session with a server at step 801 over a connection via any of the device's interfaces 605, 606 or 607. This may be done by another process running within gaming program 703, or by another program running on the user device, and will typically involve a log-in to a user account and a request being sent to play a game. This request will be received and handled by a process running within the datacentre at step 501 as described above.

Once the session is established, the game is played by running two simultaneous threads: thread 810 receives frames from the cloud gaming server, and thread 820 sends user input to the server. These threads run until the session is ended at step 802, for example because the user ends the game.

Thread 810 comprises three steps. At step 811 an encoded frame, generated by the server during thread 510, is received via the connection with the cloud gaming server and decoded. At step 812 any client-side rendering required is carried out using information provided with the frame, and at step 813 the frame is displayed on display 608. Frames are received and displayed many times a second, resulting in a video stream being displayed on the user device. An audio track and other tracks may also be received, and it will be understood that processing of these may be carried out within thread 810 or as separate threads.

Thread 820 comprises two steps. At step 821 user input is registered via sensors 609, or via any other input devices provided on the user device such as physical buttons and an accelerometer. This input may for example be movement, interacting with the environment or other characters, accessing the inventory, pausing the game, and so on. At step 822 this user input is transmitted to the server via the connection, and processed by the server in thread 520. Thread 820 is repeated every time user input is registered, although the program may combine inputs into a single transmission to the server.

A dedicating cloud gaming program for a mobile device such as a mobile phone has been described, but cloud gaming may also be provided via other device programs such as an internet browser. In that case, the cloud gaming program might comprise only routing program 705. For other devices, such as a mobile gaming console, the cloud gaming program might be native to the device and routing program 705 would be part of the connection services provided by the device.

It will be understood from the description of the programs shown in Figures 5 and 8 that low latency is needed for a user to have a seamless experience when cloud gaming. The user requires their input to be almost immediately reflected in the frames being received from the server, otherwise the user experiences lag, where their input is shown too late, after another action has taken place that affects the game. This is particularly true in fast-moving games. The server may account for latency in various ways, but this is easier over a connection with consistent latency such as a wired connection. When a user is playing a cloud game on a mobile device, particularly one connected to the internet via mobile internet access, latency is highly variable. In addition, as the user physically moves around over large distances, the connection to the server may start to experience unacceptably high levels of latency and a connection to a different server, possibly in a different datacentre, might experience lower latency. However, there is no known method of transferring a cloud gameplay session between datacentres; such a method is described herein.

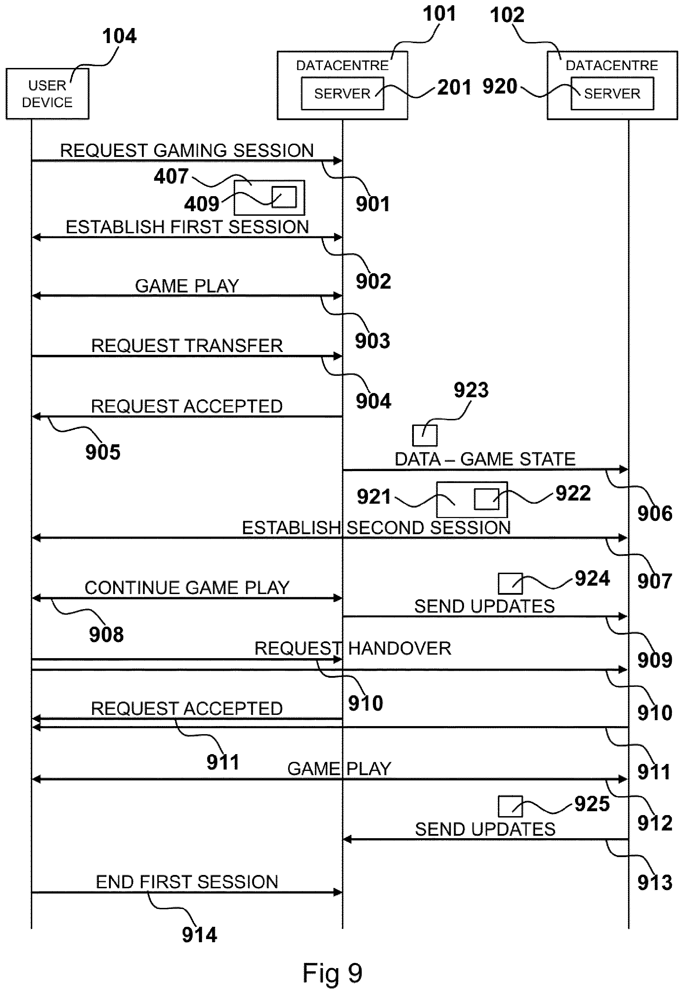

Figure 9 is a communication diagram showing the transfer of a cloud gameplay session between datacentres. It is described with reference to mobile user device 104, first datacentre 101 and second datacentre 102. However, it is suitable for any kind of user device and any kind of cloud gaming datacentre, server, or other computer system hosting a cloud gameplay session. It may also be used to transfer sessions between servers in the same datacentre, for example when a server needs to be shut down for maintenance or to avoid imminent failure, or for load balancing.

Actions shown in Figure 9 are described as being done by a datacentre; however it should be understood that each cloud gameplay session is hosted by a gameplay program on a server within the datacentre, with first server 201 being part of first datacentre 101, and second server 920 being part of datacentre 102. Actions taken to transfer a session are, in this embodiment, taken by routing program 405 running on a server in each datacentre as will be further described with reference to Figure 12. However, the routing program could run on the platform services system or another computer system within the datacentre.

At step 901 a request is sent from device 104 to first datacentre 101 to play a game, and at step 902 the device and datacentre establish a cloud gameplay session on a server, for example session 407 comprising a game state 409 on server 201. At step 903 the session is hosted by the server to allow game play by the device.

At step 904, device 104 requests a transfer to second datacentre 102. As will be described with reference to Figure 10, this may be because a connection to the second datacentre will experience lower latency than the current connection to the first datacentre; other reasons for requesting a transfer are envisaged. At step 905 first datacentre 101 indicates to device 104 that the request for a transfer has been accepted. In this embodiment the transfer is initiated by the device, but in other embodiments a datacentre or even another type of computing system may request that the transfer take place.

At step 906 first datacentre 101 sends data 923 representing the current game state for the cloud gameplay session to second datacentre 102, and at step 907 device 104 and second datacentre 102 establish a cloud gameplay session; for example session 921 is established on server 920. These two steps may occur in any order or simultaneously, or device 104 may establish session 921 before the device requests the transfer at step 904. Second datacentre 102 creates a game state in its session using the data sent by first datacentre 101; for example game state 922 is contained in session 921 hosted by server 920.

Game play continues between device 104 and first datacentre 101, as shown at step 908, and during this time first datacentre 101 sends frequent updates 924 of the game state to second datacentre 102 at step 909, so that the game states for each datacentre are synchronised.

At step 910 the user device sends a request to both datacentres for a handover of the session, and at step 911 both datacentres acknowledge the request. Again, the handover may instead be initiated by one of the datacentres or another computing system. Immediately, at step 912, a server on second datacentre 102 starts hosting the cloud gameplay session by transmitting frames to the user device; for example server 920 starts hosting session 921 comprising game state 922. The user device starts sending user input to the second datacentre instead of the first. There may be a transition period where the device sends input to both datacentres and both datacentres send frames to the user device.

Following this, at step 913, second datacentre 102 sends frequent updates 925 of the active game state to first datacentre 101 so that the two game states remain synchronised. This is so that if any problems are experienced with the connection to second datacentre 102, device 104 may request a second handover back to datacentre 101. Updates continue until the user device ends the session with first datacentre 101 at step 914.

At the end of the process shown in Figure 9, the cloud gameplay session has been transferred to a server in another datacentre without loss of data or interruption of game play. The process will be transparent to the user, although a message may be displayed to inform the user that it has happened. The process may be repeated as many times as necessary to transfer the cloud gameplay session between datacentres, or as previously discussed between servers within the same datacentre, until the user ends the session completely.

There is thus provided a method of transferring a cloud gameplay session between servers. A first server, which in this example is server 201, hosts a first cloud gameplay session comprising a first game state, which in this example is session 407 comprising game state 409, connected to a user device, which in this example is user device 104. The first server receives a request to transfer the first cloud gameplay session to a second server, obtains data representing the first game state at a first time, and sends it to the second server, which in this example is server 920. It sends updates to the first game state that occur after the first time to the second server, in this example updates 923, and ends the first cloud gameplay session.

The second server establishes a second cloud gameplay session, which in this example is session 921, connected to the user device. It receives the data from the first server, applying the data to the second cloud gameplay session, such that the second cloud gameplay session comprises a second game state, which in this example is game state 922, receiving the updates from the first server and applying the updates to the second gameplay state and, at the second server, hosting the second gameplay session with the user device.

There is also provided a method of initiating a transfer of a gameplay session between servers, comprising the steps of, at a user device, which in this example is user device 104, playing a first cloud gameplay session comprising a first game state, which in this example is session 407 comprising game state 409, hosted by a first server, which in this example is server 201. While playing the first cloud gameplay session, the user device establishes a second cloud gameplay session with a second server, which in this example is session 921 on server 920. The user device requests data representing the first game state to be sent to the second server, which in this example is data 923, such that the second cloud gameplay session comprises a second game state, which in this example is game state 922, that is identical to the first game state. The user device requests the actual transfer, ie the handover, to the second server, and then plays the second cloud gameplay session hosted by the second server and ends the first cloud gameplay session.

It is envisaged that this process will be particularly useful when a user device is moving over large distances, for example because the user is on vehicular transport. Generally, connections are faster, with less latency, to physically nearby datacentres, although routing of connections means that is not always the case. If a user is, for example, playing a game while travelling on a train, then as they move away from the datacentre hosting their cloud gameplay session the latency may increase until the user starts to experience lag. The process can transfer the session to another datacentre before that happens, thereby providing a seamless experience to the user. The process can identify another datacentre enroute that will provide a better connection, establish a new session that contains a synchronised game state, and transfer to that session at an appropriate time.

Figures 10a and 10b detail routing program 705 on user device 104. As previously discussed, on a mobile device this program is part of gaming program 703. However, it may also be a standalone program or part of a different program. The program runs while cloud gaming program 704 is running, or while the device is accessing a cloud gameplay session using a different program. The program needs access to the network connection that the device is currently using to access internet 108.

At step 1001 the user device starts continuously measuring the network health of the device's connection to the current datacentre hosting the cloud gameplay session, or the server hosting it. This may be by any suitable metric for measuring network health. In this example, the latency of the connection is measured using the round-trip time of pings. However, the metric may measure latency using a different method, or may measure bandwidth, congestion, noise, or another indicator of network health, or a combination of these.

At step 1002 it is noted that the health of the connection has fallen below a first threshold. This threshold may be an absolute or a variable threshold. For example, it may be a pre-set latency threshold, may be calculated as a percentage of recent latency measurements, or may be dependent on the time of day or location of the device. However it is determined, the latency falling below this threshold is an indication that the connection is or may soon become too slow to sustain cloud gaming without lag.

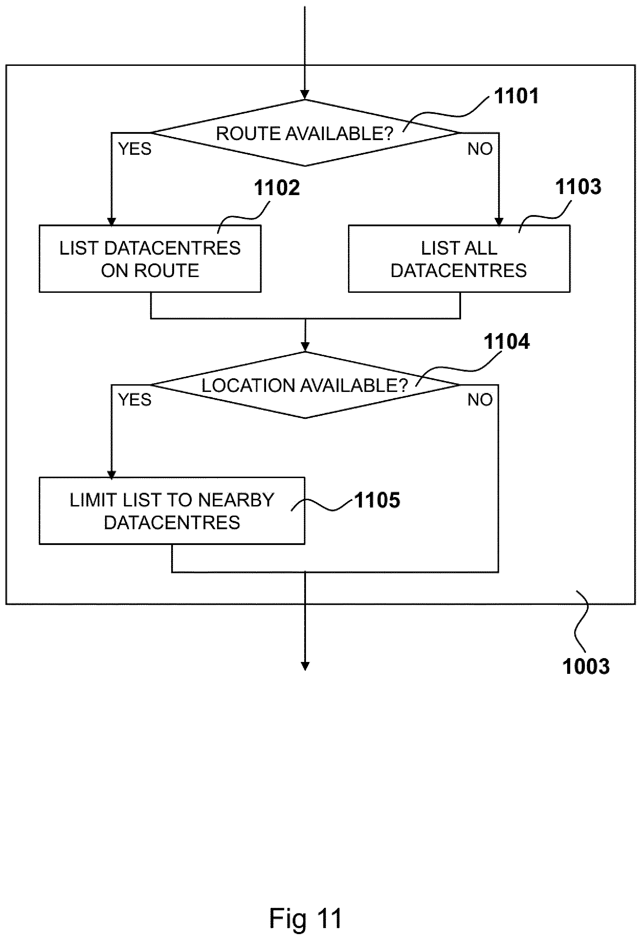

At step 1004 the user device identifies candidate datacentres for transferring the cloud gameplay session, as will be described further with reference to Figure 11. At step 1005 the health of potential connections to those datacentres is tested to identify the most suitable. This may be using the same metric as at step 1001, or a different metric. However, the round-trip time of pings is suitable as it does not require a connection to be established. A new datacentre is identified based on this testing.

At step 1005 a message is sent to both the current datacentre and the new datacentre requesting a transfer, as shown at step 904 in Figure 9. Following acceptance of this request from both datacentres, the device establishes (via cloud gaming program 704) a new session with the new datacentre (or a server on the datacentre) at step 1006. As discussed above, establishing a new session may occur before requesting the transfer.

At step 1007 the user device starts continuously measuring the network health of the device's connection to the new datacentre, while still measuring the network health of the connection to the current datacentre, until at step 1008 the health of the current connection is consistently poorer than the health of the new connection. This may occur immediately if the current connection has experienced a sharp drop in latency. Alternatively, the threshold may have been set high enough that a period of time will elapse before the user device moves close enough to the new datacentre for the new connection to be faster than the current connection.

In another embodiment, the user device may establish sessions with some or all of the candidate datacentres, and the current datacentre synchronises game states with all of them. Then, the one having the connection with the best network health is chosen to be the new datacentre at the handover point.

Handover may occur immediately upon identifying that the health of the current connection is poorer than the health of the new connection, or the process may wait for a suitable point in gameplay such as when a screen is loading, the game is paused, or no user input is required for some other reason. This would reduce the chance of the transfer causing any lag or glitch in active gameplay.

At step 1009 the user device sends a handover request to both the current and the new datacentres, as shown at step 910 in Figure 9. At step 1010, gameplay starts in the session hosted by the new datacentre, which becomes the current datacentre. The previous current datacentre becomes the old datacentre but the old session is not closed, in case it is necessary to hand the session back to the old datacentre.

The user device continues to measure the network health of the connections to both the old and the current datacentres, and when the network health of the old connection falls below a second threshold at step 1011 indicating that there is no possibility of transferring back to the old datacentre, the session with the old datacentre is ended at step 1012. Alternatively or additionally, the old session may simply be kept open for a set period of time. In another embodiment, the old session is not kept open but is ended as soon as the handover has concluded.

The user device continues to measure the network health of the connection to what is now the current database, and the program waits until this falls below the first threshold at step 1002. Alternatively, the user ends the cloud gaming session and routing program 705 ends.

Figure 11 details step 1003 at which candidate datacentres are identified from a list available to routing program 705, either in data 706 or in a networked location. If the user has indicated a route they will take using a mapping program or data accessible by routing program 705, this can be used to better identify the candidates. Therefore at step 1101 a question is asked as to whether a route is available. If this question is answered in the affirmative then the list of datacentres is limited to those that are likely to have a better connection to locations on the route. This may be assessed by distance, direction of travel, or known network conditions. For example, or if the route shows that the user intends to travel south, the list may be limited to those datacentres south of the starting point. Alternatively, if there is no route available, all datacentres are considered at step 1103.

At step 1104 a further question is asked as to whether the location of the user device is accessible to routing program 705, using GPS or similar. If this question is answered in the affirmative then the location can be used to limit the list of datacentres to those that are nearer or are likely to have a better connection, in combination with the route if one is available. For example, there may be two datacentres that are the same distance away from the user device, but the route shows that the user device will travel closer to one of them than the other.

At the completion of step 1003, a list of candidate datacentres has been identified. This may be all datacentres known to the routing program, or a more limited list. The network health of the connections to the candidate datacentres can then be tested at step 1004 as described above. In an alternative embodiment, if location data is available then the datacentre that is physically closest may be identified as the new datacentre without testing the candidate connections. However, the fastest connection is not necessarily to the closest datacentre, as packets are not generally routed in a straight line.

It should be noted that routing program 705 is generally only aware of datacentres, and not the servers or systems within those datacentres. Therefore, the requests sent by the user device are sent to the datacentre and then routed to the appropriate server or computer system within it. A cloud gameplay session is actually transferred between servers, either from a server in one datacentre to a server in another datacentre, or between servers in the same datacentre. However, the servers may not be aware of each other for some or all of the process, and communication may be routed through other systems in the datacentres. Therefore, while the below description of a routing program refers to transfers between servers, it should be understood that all communication related to the transfer may be handled by another system.

Figure 12 details routing program 405 that runs on each server in a datacentre, which handles transferring a session to or from the server. In this embodiment the program runs on the server that is or will be hosting the session, but some or all of it may also run on the platform services system for the datacentre, another system within the datacentre, or a computer system external to the datacentre, or it may be distributed across a number of computer systems.

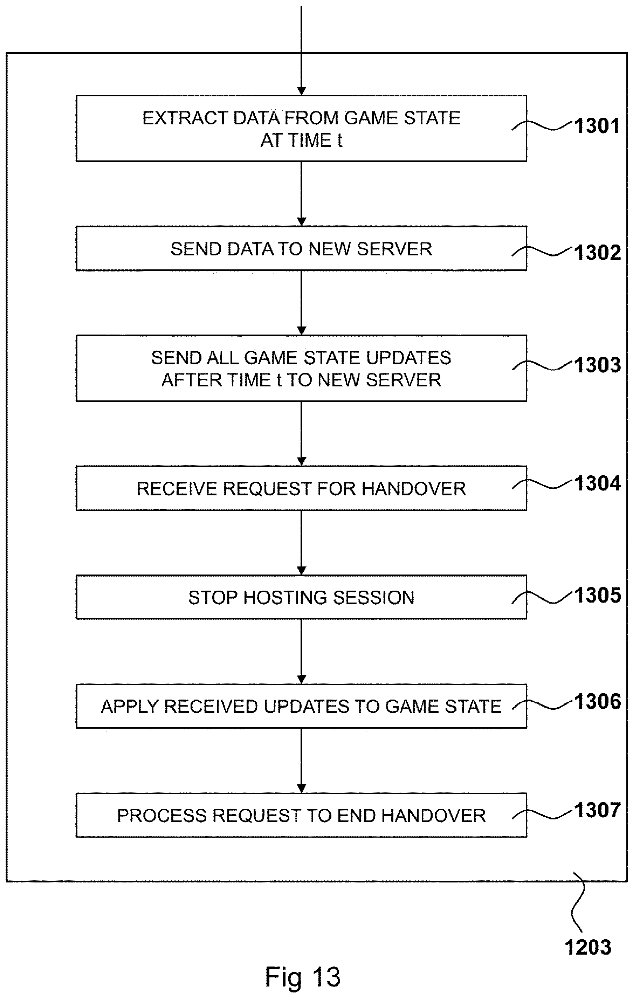

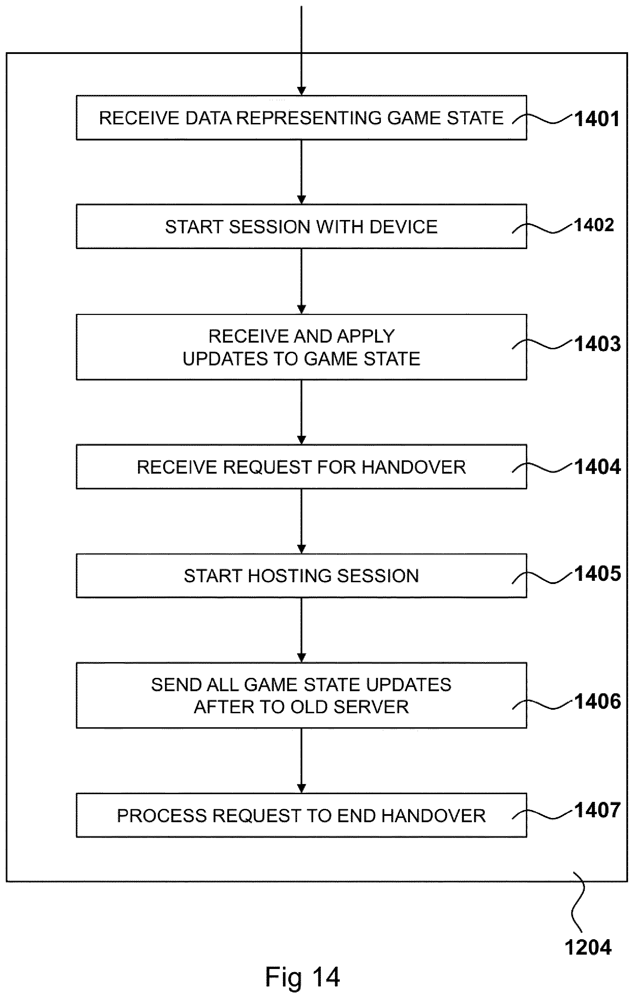

At step 1201 an instance of the request is started by receipt of a request for a transfer of a cloud gameplay session, sent in this example by the user device at step 1005. At step 1202 a question is asked as to whether this is a transfer to or from the server running the program. If it is from the server, then this is handled at step 1203, as will be further detailed in Figure 13. If it is to the server, then this is handled at step 1204, as will be further detailed in Figure 14. Therefore, an instance of routing program 405 runs on both the current server and the new server.

Requests may also be initiated by the datacentres themselves, for example to transfer cloud gameplay sessions between servers in the same datacentre, or by some other computing system. In this case, a process not further described herein might run on a system in a datacentre, such as platform services system 205, to determine when a transfer of a session between servers in the same or different datacentres would be appropriate. As an example, such a process might monitor a metric of server health or datacentre health in order to determine that a session should be transferred, and issue a request. Such requests would be handled in much the same way as requests from mobile devices.

Figure 13 details step 1203 which handles a request to transfer a cloud gameplay session to an identified server or datacentre. As previously discussed, this may run on the server hosting the session, or it may be coordinated by another system within the datacentre such as the platform services system. However, it is described here as running on server 201, which is hosting session 407 by running gameplay program 404, and in this example it has received a request to transfer the session to datacentre 102. At step 1301 data representing game state 409 is extracted at a current time t. Depending on the type of game and the way in which the game state is stored, this data may be a duplicate of the game state, or may be data from the game state that can be added to a generic game state for that game, or may comprise a series of updates to a generic game state, or may be any other data that will allow another server to replicate game state 409. At step 1302 this data is sent to the new datacentre or server, which in this example is datacentre 102. The handling of this data will be described with reference to Figure 14.

Server 201 continues to host cloud gameplay session 407, and at step 1303 continuously sends all updates to the game state to the new server or datacentre. This continues until at step 1304 a request for handover is received, sent in this example by the user device at step 1009. At step 1305 the routing program 405 informs gameplay program 404 on server 201 to stop hosting the session. Gameplay program 404 stops thread 510, thereby stopping sending frames to the user device. At step 1306 any updates to the game state received from datacentre 102 are passed to gameplay program 404 to update game state 409, possibly using thread 520 or similar.

Finally, a request to end the session, sent in this example by the user device at step 1012, is received, and processed by ending session 407. This completes step 1203, and also this instance of program 405.

Figure 14 details step 1204 which handles a request to accept the transfer of a cloud gameplay session from another server. As previously discussed, this aspect of the program may run on a cloud gaming server or it may be coordinated by or run on another system within the datacentre such as the platform services system. However, it is described here as running on server 920 which is part of datacentre 102. A system within datacentre 102 receives the request and allocates it to server 920.

At step 1401 data representing a game state is received from server 201, sent at step 1302, and at step 1402 the gameplay program 404 running on server 920, or a new instance of it, is requested to start a new session using the details from the request and the received data. Referring back to Figure 5, in this example gaming program 404 running on server 920 establishes a session 921 with requesting user device 104 at step 501, loads the requested game at step 502, and establishes game state 921 at step 503. Establishing the game state may comprise simply using the received data as the game state, or applying the data to a generic game state, or some other method, depending on the type of game and the way in which the game state is configured and stored. Once it has been created, it is a replica of game state 409 at time t. At this point, gameplay program 404 on server 920 is ready to host cloud gameplay session 921 and waits.

Updates to game state 409 are continually received and applied to game state 922 at step 1403 such that the two game states are synchronised. This may be done by gameplay program 404 running thread 520 and applying updates in the same way that user input is used to update the game state, or in another way. Eventually at step 1404 a request is received for handover of the session, sent in this example by the user device at step 1009, and at step 1405 hosting of the new session 921 is started by instructing gameplay program 404 to continue. Gameplay program 404 on server 920 therefore starts running thread 510 to render and transmit frames, and thread 520 to process user input to game state 922.

At step 1406 server 920 continuously sends all updates to game state 922 to the old server or datacentre, until it receives a request at step 1407 to end the handover. This completes step 1204, and also this instance of program 405.

## Claims

1. A method of transferring a cloud gameplay session between servers, comprising the steps of:
at a first server (201), hosting (903) a first cloud gameplay session (407) connected to a user device (104), the session comprising a first game state (409);
at the first server, receiving (903) a request to transfer the first cloud gameplay session to a second server (920);
obtaining data (923) representing the first game state at a first time and sending (906) said data to the second server;
sending (909) first updates (924) to the first game state that occur after the first time to the second server; and
ending (914) the first cloud gameplay session.

2. A method according to claim 1, further comprising the step of, after ending the first cloud gameplay session:
receiving (913) second updates (925) from the second server and applying said second updates to the first game state.

3. A method according to either of claims 1 or 2, further comprising the steps of:
at the second server, establishing (907) a second cloud gameplay session (921) connected to the user device;
receiving the data from the first server;
applying the data to the second cloud gameplay session, such that the second cloud gameplay session comprises a second game state (922);
receiving the first updates from the first server and applying the first updates to the second game state; and
at the second server, hosting (912) the second gameplay session with the user device.

4. A method according to any of claims 1 to 3, wherein at least one of the following:
one or more of the steps of obtaining the data, sending the data, and sending updates is carried out at the first server; and
one or more of the steps of receiving the data, applying the data to the second cloud gameplay session, receiving the updates, and applying the updates to the second game state is carried out at the second server.

5. A method according to either of claims 3 or 4, further comprising the step of, at the second server, after starting to host the second gameplay session with the user device, sending the second updates to the second game state to the first server.

6. The method according to any of claims 1 to 5, wherein the request to transfer the cloud gameplay session is received from the user device.

7. A method of initiating a transfer of a gameplay session between servers, comprising the steps of, at a user device (104):
playing (903) a first cloud gameplay session (407) hosted by a first server (201), said first cloud gameplay session comprising a first game state (409);
while playing the first cloud gameplay session:
establishing (1006) a second cloud gameplay session (921) with a second server (920), and
requesting (1005) that data (923) representing the first game state be sent to the second server, such that the second cloud gameplay session comprises a second game state (922) that is identical to the first game state;
requesting (1009) a transfer to the second server;
playing (912) the second cloud gameplay session hosted by the second server; and
ending (1012) the first cloud gameplay session.

8. A method according to claim 7, wherein the user device is connected to the first server by a first connection over which the first cloud gameplay session is played, further comprising the steps of:
using a first metric, measuring (1001) the network health of the first connection;
determining (1002) that the network health of the first connection is below a first threshold;
creating a second connection to the second server over which the second gameplay session is established; and
using the first metric, measuring (1001, 1007) the network health of both the first and second connections; and
determining (1008) that the network health of the second connection is better than that of the first connection before sending the transfer request.

9. A method according to claim 8, further comprising the step of, before creating the second connection:
identifying (1003) a plurality of candidate servers;
testing (1004) the network health of a connection to each of the candidate servers; and
identifying one of the candidate servers as the second server, based on the results of the testing.

10. A method according to either of claims 8 or 9, further comprising the step of, after creating the second connection, sending (1004) a request to the first server to send the data to the second server.

11. A method according to any of claims 8 to 10, further including the step of, after determining that the network health of the second connection is better than that of the first connection, sending a request to the second server to host the second gameplay session;
and optionally further comprising the steps of, after sending the request to the second server:
continuing to measure the network health of the first connection;
determining (1011) that the network health of the first connection is below a second threshold; and
closing the first connection with the first server.

12. A method according to any of claims 7 to 11, further comprising the steps of:
at the first server, hosting (903) the first cloud gameplay session with the user device;
obtaining data (923) representing the first game state at a first time and sending (906) said data to the second server; and
sending (909) updates (924) to the first game state that occur after the first time to the second server;
and optionally further comprising the steps of.
at the second server, establishing (907) the second cloud gameplay session with the user device;
receiving the data from the first server;
applying the data to the second cloud gameplay session; and
receiving the updates from the first server and applying the updates to the second game state.

13. Data processing apparatus (201, 104) comprising a processor (301, 602) and a memory (302, 306) storing instructions that, when executed by the processor, cause the processor to perform the method of any of claims 1 to 6, or 7 to 11.

14. A computer program comprising instructions which, when the program is executed by a computer, cause the computer to carry out the method of any of claims 1 to 6, or 7 to 11.

15. A computer-readable storage medium having stored thereon the computer program of claim 14.
